**Europäisches Patentamt**

**European Patent Office**

**Office européen des brevets**

(19)

(11) Veröffentlichungsnummer: **0 328 759 B1**

(12) **EUROPÄISCHE PATENTSCHRIFT**

(45) Veröffentlichungstag der Patentschrift:
12.06.91 Patentblatt 91/24

(51) Int. Cl.$^5$: **F16B 21/16**

(21) Anmeldenummer: **88120450.7**

(22) Anmeldetag: **07.12.88**

(54) **Anordnung zur Befestigung eines Bremskraftverstärkers.**

(30) Priorität: **17.02.88 DE 3804850**

(43) Veröffentlichungstag der Anmeldung:
**23.08.89 Patentblatt 89/34**

(45) Bekanntmachung des Hinweises auf die
Patenterteilung:
**12.06.91 Patentblatt 91/24**

(84) Benannte Vertragsstaaten:
**DE ES FR GB IT**

(56) Entgegenhaltungen:
**EP-A- 0 121 114
DE-U- 8 507 143
GB-A- 989 967
US-A- 3 213 506**

(73) Patentinhaber: **ALFRED TEVES GMBH
Guerickestrasse 7
W-6000 Frankfurt/Main 90 (DE)**

(72) Erfinder: **Bischoff, Gilbert
Rosengarten 4
W-6234 Hattersheim (DE)**
Erfinder: **Breitwieser, Karl
Am Spielfeld 4
W-6107 Reinheim 1 (DE)**
Erfinder: **Kirchner, Wolfgang
Neugasse 17
W-6236 Eschborn (DE)**

## Beschreibung

Die Erfindung betrifft eine Anordnung zur Befestigung eines Bremkraftverstärkers an der Spritzwand eines Kraftfahrzeuges, an dessen Verstärkergehäuse mindestens zwei Befestigungselemente vorgesehen sind, die mit der Spritzwand in einer ohne Werkzeug herstellbaren, lösbaren Verbindung stehen.

Eine derartige Anordnung ist aus der DE-OS 36 29 181 bekannt. Bei der darin offenbarten Befestigungsanordnung trägt das Bremskraftverstärkergehäuse mindestens zwei geformte Muttern, die durch entsprechende, in der Spritzwand eines Kraftfahrzeuges ausgebildeten Durchbrüche hindurchgesteckt werden, wonach der Bremskraftverstärker durch eine Drehbewegung bzw. eine lineare Verschiebung in eine Sicherungslage gebracht wird, in der er lösbar verrastet wird. Dabei sind zwischen dem Bremskraftverstärker und der Brandwand elastische Mittel, vorzugsweise in Form einer an den Muttern angebrachten Federplatte vorgesehen, die den Bremskraftverstärker gegen die Brandwand oder eine daran befestigte Befestigungsklammer elastisch vorspannt. Um den Bremskraftverstärker in dessen Sicherungslage lösbar verrasten zu können, weist die Federplatte einen abstehenden Finger auf, an dessen Ende eine Lippe oder Nase ausgebildet ist, die in eine in der Brandwand vorgesehene Einkerbung einrastet.

Weniger vorteilhaft anzusehen ist bei der bekannten Befestigungsanordnung der verhältnismäßig komplizierte Montagevorgang, der insbesondere im Hinblick auf die erforderliche Dreh- bzw. Verschiebebewegung und die dafür benötigten Hilfsmittel im engen Motorraum nur schwierig durchzuführen ist. Ein weiterer Nachteil kann auch darin gesehen werden, daß die Einzelteile einer solchen Befestigungsanordnung entweder sehr genau gefertigt werden müssen, oder eine starke Feder erforderlich ist, um das in der Verbindung auftretende Spiel zu eliminieren. Als nachteilig können auch die Vorarbeiten empfunden werden, die im Zusammenhang mit der Ausbildung der Einkerbungen an der Spritzwand durchzuführen sind.

Weiterhin ist in der Fahrzeugtechnik z.B. aus DE-U-8 507 143 eine Befestigungsvorrichtung für flächige Materialien an einer tragenden Unterlage bekannt, bei der zur Halterung von beispielsweise Verkleidungen in Kraftfahrzeugen Kunststoffclips verwendet werden, die mit einem Schaft in eine Aufnahmeöffnung federnd einrastbar sind. Die Aufnahmeöffnung für den Kunststoffclip ist dabei in einer zähelastischen, mit einem Ringflansch versehenen Kunststoffbuchse angeordnet und weist eine Einschnürung in axialem Abstand von dem Ringflansch auf, um beim Eindrücken des Schaftes des Kunststoffclips in die Aufnahmeöffnung eine radiale Aufweitung der Kunststoffbuchse unterhalb des Ringflansches zu erzeugen.

Es ist daher Aufgabe der vorliegenden Erfindung, eine Anordnung zur Befestigung eines Bremskraftverstärkers der eingangs genannten Gattung anzugeben, die eine spielfreie Befestigung des Bremskraftverstärkers an der Spritzwand eines Kraftfahrzeuges bei gleichzeitiger Vereinfachung der Montage und Senkung deren Kosten ermöglicht.

Diese Aufgabe wird erfindungsgemäß dadurch gelöst, daß die Befestigungselemente in an der Spritzwand vorgesehene Zentrierhülsen axial einführbar sind und mit den Zentrierhülsen in formschlüssiger Verbindung stehen, wobei jede Zentrierhülse zwei mittels einer Ringfeder radial begrenzt beweglich gehaltene Haltesegmente aufweist, die mit einer am Befestigungselement ausgebildeten Ringnut zusammenwirken.

Durch diese Maßnahmen wird erreicht, daß keine zusätzliche Positionierung der Haltesegmente erforderlich ist.

Um ein Einführen der Befestigungselemente in die Zentrierhülsen zu erleichtern, wird nach einem weiteren Erfindungsmerkmal vorgesehen, daß jedes Befestigungselement an seinem spritzwandseitigen Ende eine konische Verjüngung aufweist.

Bei einer weiteren vorteilhaften Weiterbildung der erfindungsgemäßen Befestigungsanordnung ist mindestens eine der Seitenflanken der Ringnut jedes Befestigungselementes schräg ausgebildet, wobei deren Zusammenwirken mit den entsprechenden Schrägen der Haltesegmente im Bereich der Selbsthemmung liegt. Diese Maßnahme ermöglicht einen wirksamen Toleranzausgleich zwischen den beiden zusammenwirkenden Teilen.

Die Erfindung wird nachstehend an einem in der beiliegenden Zeichnung gezeigten Ausführungsbeispiel im Zusammenhang mit der folgenden Beschreibung näher erläutert.

Es zeigen :

Fig. 1 einen Teil eines Bremskraftverstärkers im Bereich eines Befestigungselementes im Schnitt;

Fig. 2 die Spritzwand eines Kraftfahrzeuges mit einer Zentrierhülse im Schnitt ;

Fig. 3 die Befestigungsanordnung nach der Erfindung im Schnitt, und

Fig. 4 den Schnitt A-A nach Fig. 3.

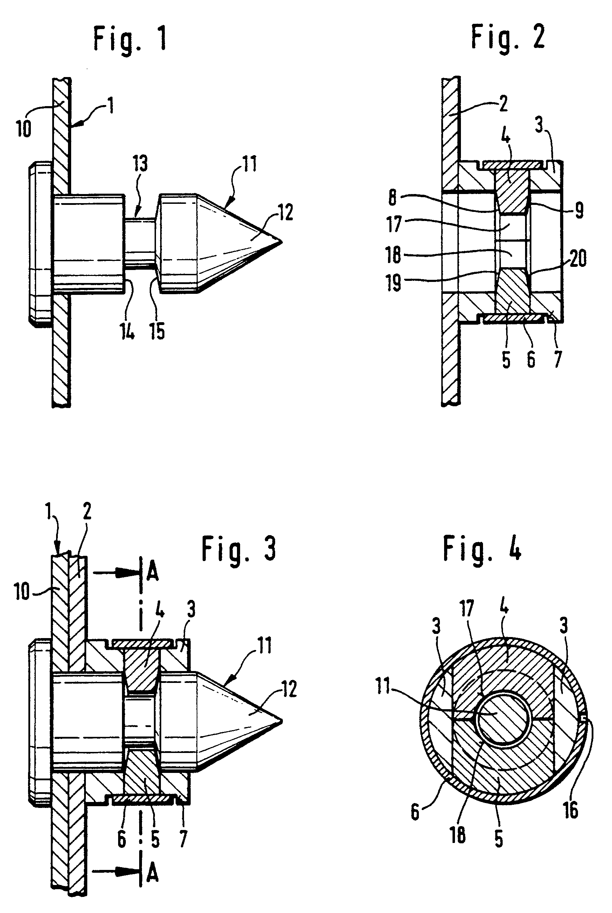

Ein in der Zeichnung schematisch dargestellter Bremskraftverstärker 1 weist ein Verstärkergehäuse 10 auf, dessen einer Spritzwand 2 (Fig. 2) eines nicht dargestellten Kraftfahrzeuges zugewandte Fläche mit mindestens zwei symmetrisch gegenüberliegend angeordneten Befestigungselementen 11 versehen ist. Jedes Befestigungselement 11 weist an seinem spritzwandseitigen Ende eine konische Verjüngung 12 auf und ist etwa in der Mitte seiner axialen Länge mit einer umlaufenden Ringnut 13 versehen. Die durch zwei Seitenflanken 14, 15 begrenzte Ringnut 13 ist vorzugsweise so ausgebildet, daß mindestens eine der Seitenflanken 15 nicht senkrecht, sondern unter einem bestimmten Winkel zur Längsachse des Befestigungselementes 11 verläuft.

An der in Fig. 2 gezeigten Spritzwand 2 sind mindestens zwei Zentrierhülsen 3 angebracht, in die die Befestigungselemente 11 des Bremskraftverstärkers 1 axial einführbar sind. Jede Zentrierhülse 3 weist einen näher nicht dargstellten Schacht auf, in dem zwei Haltesegmente 4, 5 radial gegenüberliegend begrenzt beweglich angeordnet sind. An ihrem dem Hülseninneren zugewandten Enden weisen die Haltesegmente 4, 5 je eine halbkreisförmige Ausnehmung 17, 18 auf, deren Radius etwa dem des Befestigungselementes 11 im Bereich der Ringnut 13 entspricht. Die radiale Beweglichkeit der Haltesegmente 4, 5 wird durch eine Ringfeder 6 begrenzt, die eine Unterbrechung 16 aufweist und in einer in der Oberfläche der Zentrierhülse 3 ausgebildeten Ausnehmung 7 angeordnet ist. Die in die Ringnut 13 des Befestigungselementes 11 hineingreifenden Seitenflächen der Haltesegmente 4, 5 sind schließlich mit Schrägen 8, 9 bzw. 19, 20 versehen, deren Aufgabe im Zusammenhang mit der nachfolgenden Beschreibung der Figuren 3 und 4 erläutert ist.

Bei der Montage des Bremskraftverstärkers 1 an die Spritzwand 2 des Kraftfahrzeuges wird der Bremskraftverstärker zunächst so positioniert, daß seine Befestigungselemente 11 gegenüber den an der Spritzwand 2 vorzugsweise angeschweißten Zentrierhülsen 3 stehen. Bei einer nachfolgenden Bewegung in Richtung der Verstärkerachse wird die am spritzwandseitigen Ende des Befestigungselementes 11 ausgebildete konische Verjüngung 12 in die durch die oben erwähnten halbkreisförmigen Ausnehmungen 17, 18 gebildete Öffnung eingeführt, so daß bei einem weiteren Verschieben des Bremskraftverstärkers 1 auf die Spritzwand 2 zu die Haltesegmente 4, 5 unter elastischem Nachgeben der Ringfeder 6 auseinandergedrückt werden und ein Durchstecken der Betätigungselemente 11 ermöglichen. In der Endphase der Montage erscheint die Ringnut 13 des Befestigungselementes 11 radial direkt gegenüber den Haltesegementen 4, 5, die unter der Wirkung der Ringfeder 6 in die Ringnut 13 einrasten können, wobei die in Fig. 2 rechts dargestellten Schrägen 9 und 20 der Haltesegmente 4, 5 mit der schräg verlaufenden Seitenflanke 15 der Ringnut 13 eine selbsthemmende Verbindung bilden. Dadurch werden sämtliche in der erfindungsgemäßen Befestigungsanordnung auftretenden Toleranzen ausgeglichen und der Bremskraftverstärker 1 gegenüber der Spritzwand 2 genau positioniert.

Bezugszeichenliste

1    Bremskraftverstärker
2    Spritzwand
3    Zentrierhülse
4    Haltesegment
5    Haltesegment
6    Ringfeder
7    Ausnehmung
8    Schräge
9    Schräge
10   Verstärkergehäuse
11   Befestigungselement
12   Verjüngung
13   Ringnut
14   Flanke
15   Flanke
16   Unterbrechung
17   Ausnehmung
18   Ausnehmung

Ansprüche

1. Befestigungsanordnung eines Bremskraftverstärkers an der Spritzwand eines Kraftfahrzeuges, an dessen Verstärkergehäuse mindestens zwei Befestigungselemente vorgesehen sind, die mit der Spritzwand in einer ohne Werkzeug herstellbaren, lösbaren Verbindung stehen, dadurch **gekennzeichnet**, daß die Befestigungselemente (11) in an der Spritzwand (2) vorgesehene Zentrierhülsen (3) axial einführbar sind und mit den Zentrierhülsen (3) in formschlüssiger Verbindung stehen, wobei jede Zentrierhülse (3) zwei mittels einer Ringfeder (6) radial begrenzt beweglich gehaltene Haltesegmente (4, 5) aufweist, die mit einer am Befestigungselement (11) ausgebildeten Ringnut (13) zusammenwirken.

2. Befestigungsanordnung nach Anspruch 1, dadurch **gekennzeichnet**, daß die Ringfeder (6) in einer in der Zentrierhülse (3) ausgebildeten umlaufenden Ausnehmung (7) angeordnet ist.

3. Befestigungsanordnung nach Anspruch 1, dadurch **gekennzeichnet**, daß jedes Befestigungselement (11) an seinem spritzwandseitigen Ende eine konische Verjüngung (12) aufweist.

4. Befestigungsanordnung nach Anspruch 1, dadurch **gekennzeichnet**, daß die Haltesegmente (4, 5) in ihrem mit der Ringnut (3) zusammenwirkenden Bereich mit Schrägen (8, 9) versehen sind.

5. Befestigungsanordnung nach den Anspruch 4, dadurch **gekennzeichnet**, daß mindestens eine (15) der Seitenflanken (14, 15) der Ringnut (13) schräg ausgebildet ist, wobei deren Zusammenwirken mit den entsprechenden Schrägen (9, 20) der Haltesegmente (4, 5) im Bereich der Selbsthemmung liegt.

Claims

1. An arrangement for the fixation of a brake power booster to the splashboard of an automotive vehicle, on the booster housing whereof there is provision of at least two fixing elements which are in detachable engagement with the splashboard that can be brought about without tools,
**characterized** in that the fixing elements (11) are axially insertable into centering sleeves (3) provided on the splashboard (2) and are in positive engagement with said centering sleeves (3), with each centering sleeve (3) being furnished with two retaining segments (4, 5), which are held by means of an annular spring (6) in a manner movable radially within limits and which cooperate with an annular groove (13) designed on the fixing element (11).

2. A fixing arrangement as claimed in claim 1, **characterized** in that the annular spring (6) is arranged in a circumferential recess (7) designed in the centering sleeve (3).

3. A fixing arrangement as claimed in claim 1, **characterized** in that each fixing element (11) is furnished with a conical tapered portion (12) at its end close to the splashboard.

4. A fixing arrangement as claimed in claim 1, **characterized** in that the retaining segments (4, 5) are provided with inclinations (8, 9) in their area cooperating with the annular groove (3).

5. A fixing arrangement as claimed in claim 4, **characterized** in that at least one (15) of the flanks (14, 15) of the annular groove (13) is of inclined design, its coaction with the mating inclinations (9, 20) of the retaining segments (4, 5) being in the range of automatic locking.

## Revendications

1. Agencement de fixation d'un amplificateur d'effort de freinage sur le tablier d'un véhicule automobile, au moins deux éléments de fixation étant prévus sur le boîtier de cet amplificateur et faisant l'objet d'une jonction avec le tablier qui est réalisable sans outil et est démontable, caractérisé en ce que les éléments de fixation (11) sont agencés de façon à pouvoir être introduits axialement dans des douilles de centrage (3) prévues sur le tablier (2) et coopèrent, par complémentarité de formes, avec ces douilles de centrage (3), chaque douille de centrage (3) comprenant deux segments de maintien (4, 5) qui sont maintenus mobiles radialement, d'une manière limitée, à l'aide d'un ressort annulaire (6) et qui coopèrent avec une gorge annulaire (13) ménagée sur l'élément de fixation (11).

2. Agencement de fixation suivant la revendication 1, caractérisé en ce que le ressort annulaire (6) est disposé dans un évidement circonférentiel (7) ménagé dans la douille de centrage (3).

3. Agencement de fixation suivant la revendication 1, caractérisé en ce que chaque élément de fixation (11) comporte une partie convergente conique (12) à son extrémité située du côté du tablier.

4. Agencement de fixation suivant la revendication 1, caractérisé en ce que, dans leur zone coopérant avec la gorge annulaire (3), les segments de maintien (4, 5) sont pourvus de parties inclinées (8, 9).

5. Agencement de fixation suivant la revendication 4, caractérisé en ce qu'au moins l'un (15) des flancs latéraux (14, 15) de la gorge annulaire (13) est incliné, sa coopération avec les parties inclinées correspondantes (9, 20) des segments de maintien (4, 5) se trouvant dans le domaine de l'autoblocage.

# Fig. 1

# Fig. 2

# Fig. 3

# Fig. 4